# EUROPÄISCHE PATENTSCHRIFT

(11) **EP 0 965 768 B1**
(45) Veröffentlichungstag und Bekanntmachung des Hinweises auf die Patenterteilung: **25.09.2002**
(21) Anmeldenummer: 99810505.0
(22) Anmeldetag: 09.06.1999
(51) Int. Cl.: F16B 39/02, F16B 39/38

(54) **Spannmutter**
Clamp nut
Ecrou de fixation

(30) Priorität: 16.06.1998 CH 130098
(43) Veröffentlichungstag der Anmeldung: 22.12.1999
(73) Patentinhaber: IBC Industrial Bearings + Components AG, 2540 Grenchen (CH)
(72) Erfinder: Kling, Robert A., 35606 Solms-Oberbiel (DE)
(74) Vertreter: Groner, Manfred

(56) Entgegenhaltungen:
- DE-A- 3 020 521
- DE-A- 3 917 758
- FR-A- 2 743 121
- US-A- 5 540 529

## Beschreibung

Die Erfindung betrifft eine Spannmutter, mit einem massiven Mutternblock, der ein Innengewinde, eine planbearbeitete und im rechten Winkel zur Achse des Gewindes ausgerichtete Stirnfläche sowie eine Umfangsfläche aufweist, mit Klemmelementen, die jeweils einen sich radial erstreckenden und segmentförmigen Ausschnitt aus einem Teil des Mutternblockes bilden und zur axialen Sicherung mittels einer achsparallel bedienbaren Klemmschraube federnd verkippbar sind.

Spannmuttern dieser Art sind beispielsweise aus der SU-A-1 375 873, der FR-A-668 722 sowie der EP-A-0 609 286 bekannt geworden. Solche Spannmuttern sind gegen ein Losdrehen gesichert und bestehen im wesentlichen aus einem massiven Mutternblock.

Durch die DE-A-39 17 758 ist eine verrigelbare Mutter bekannt geworden, die zwei Klemmbackenabschnitte (12A, 12B) aufweist, die jeweils durch einen radialen Schlitz (18) gebildet sind. Zum Festlegen der Mutter werden diese Klemmbackenabschnitte verklemmt, wodurch ein axialer Druck durch Verformung dieser Abschnitte erzeugt wird.

Muttern mit Klemm- und Blockiereinrichtungen sind in den verschiedensten Bauformen bekannt. Unterschieden werden hauptsächlich solche mit radialer Blockierung und solche mit axialer Blockierung. Durch verschiedene Fertigungsverfahren wird auf eine hohe Genauigkeit des Gewindes bezogen auf den Planlauf einer Stirnfläche Wert gelegt. Weiter wird gefordert, dass die Losbrechmomente ein Mehrfaches des Anzugsmomentes betragen sollten. Diese Forderungen können bei den marktgängigen Ausführungen mit radialen Sicherungssystemen erreicht werden. Diese Muttern haben in der Regel zwei oder mehrere radiale Befestigungspfropfen, die teils aus Buntmetall gefertigt sind und gleichzeitig mit der Mutter bearbeitet werden. Diese Sicherungspfropfen werden nach dem Anziehen der Muttern mit dem gewünschten Drehmoment durch Schrauben gegen das Geweinde blockiert und erreichen so einen hohen Sicherheitsgrad bezogen auf das Losbrechmoment. In vielen Fällen ist jedoch aus bautechnischen Gründen eine radiale Sicherung nicht möglich. Um eine axiale Sicherung zu erreichen, müssen die Sicherungselemente achsparallel zu bedienen sein. Hierzu gibt es im wesentlichen zwei Systeme, die jedoch beide mit erheblichen Nachteilen verbunden sind.

Bei dem einen System wird die Sicherung wie beim radialen Sicherungssystem durch radial auf das Gewinde wirkende Pfropfen vorgenommen. Hierbei ist jedoch eine 90°-Umlenkung notwendig, um die Anzugsschrauben achsparallel anzuordnen. Die 90°-Umlenkung geschieht nun in der Regel durch zwei Systeme, entweder haben die Axialanzugsschrauben und der Pfropfen eine kegelförmige Fläche, die jeweils die Kraft übertragen soll oder es gibt Ausführungen, die eine Exzenterklemmung haben. Beide Ausführungen sind jedoch nicht in der Lage, die notwendigen Kräfte aufzubringen, um die geforderten Losbrechmomente zu erreichen. Bei ungünstigen Toleranzen kann das Losbrechelement gleich dem Anzugselement sein. Dies hat zur Folge, dass in der Praxis oft Hilfsmittel, wie beispielsweise Kleber erforderlich sind. In diesem Fall ist dann in der Regel der ganze Aufwand für das Sicherungssystem nutzlos.

Beim zweiten System wird mit dem Prinzip der axialen Verspannung gearbeitet. Dieses Prinzip ist auch bei anderen technischen Bauelementen, beispielsweise bei Kupplungen, bekannt und an sich wirkungsvoll. Um jedoch eine Verspannung des Mutternblockes in axialer Richtung vornehmen zu können, muss der anwendungsbedingt gewünschte steife Mutternblock mit einer gewissen Elastizität versehen werden. Dies geschieht in vielfältiger Form. Muttern mit Einstichen in radialer Form im Innendurchmesser oder im Aussendurchmesser oder im Innen- und Aussendurchmesser sind marktüblich. Um weitere Elastizität zu erreichen, werden ebenfalls zusätzlich zu radialen Einstichen noch Segmentierungen vorgenommen. Diese Segmentierungen sollen die Klemmfähigkeit vergrössern. Spannmuttern nach diesem zweiten System haben gemeinsam, dass sie jeweils auf den gesamten radialen Umfang der Mutter immer in irgendeiner Form gegen den Grundblock verspannt werden. Das ergibt zwar die gewünschte axiale Sicherung, jedoch wird die Planfläche in erheblichem Masse verzogen, was zu einer Erhöhung oder Verminderung der axialen Anpresskraft führt. Dies kann unter anderem bei Spindellagern zu einer Verminderung der Vorspannung und somit zu einem Verlust der Steifigkeit und Präzision führen. Im Bereich der Werkzeugmaschinen ist dies nicht vertretbar. In einigen Fällen wird auch die Mutter wieder etwas gelöst, so dass sie noch einmal nachgestellt und erneut über die Spannschrauben angezogen werden muss. Dies führt zu wellenförmiger Verformung der Planfläche und zu ungleichem Druck auf das zu spannende Teil. Genau dies ist es jeoch, was bei präzisen Anwendungen einer Spannmutter vermieden werden sollte.

Der Erfindung liegt die Aufgabe zugrunde, eine Spannmutter der genannten Gattung zu schaffen, welche die oben genannten Nachteile vermeidet. Bei der erfindungsgemässen Spannmutter soll somit ein Verzug der Planfläche und das Lösen durch nicht ausreichende Sicherung in grösserem Mass als bisher verhindert sein und zudem soll sie kostengünstig hergestellt werden können.

Die Aufgabe ist bei einer Spannmutter dadurch gelöst, dass die Klemmelemente höchstens 50 % des genannten Teils bilden, derart, dass beim axialen Sichern auf der Spannseite höchstens 50 % des Gewindeumfangs in der ursprünglich gefertigten Form verändert werden. Die erfindungsgemässe Spannmutter besteht somit im wesentlichen aus einem Basismutterblock. Auch auf der Spannseite werden beim axialen Sichern nicht mehr als 50 % des ursprünglichen Blocks und Gewindes in der ursprünglich gefertigten Form verändert. Würde man die Klemmteile entfernen, so wäre die Mutter im Gegensatz zum Stand der Technik noch über die gesamte Länge funktionsfähig. In der aktiven Klemmzone werden somit vom ursprünglichen massiven Grundblock mehr als 50 % nicht verändert.

Nach einer Weiterbildung der Erfindung ist eine gerade Anzahl von Klemmelementen vorgesehen und in Umfangsrichtung gesehen werden diese Klemmelemente abwechselnd in entgegengesetzte axiale Richtungen verkippt. Die Klemmelemente sind dann so ausgestaltet, dass ein Klemmelement sich am Grundblock abstösst und das andere sich anzieht. Die Kräfte heben sich dann somit gegenseitig auf. Es ergibt sich eine Verkrallung der Klemmelemente gegenseitig im Gewinde, so dass so gut wie keine internen Kräfte auf den ursprüngliche Mutternblock übertragen werden. Es handelt sich hier dann um ein echtes Blockiersystem und nicht um die Verklemmung von zwei Mutterteilen, wie bei den marktgängigen Ausführungen.

Das Verkippen der Klemmelemente erfolgt in besonders geeigneter Weise dadurch, dass die Klemmelemente abwechselnd mit einer Druck- oder Zugschraube versehen sind.

Nach einer Weiterbildung der Erfindung ist der genannte Teil im Inneren der Mutter angeordnet. Dies ergibt eine besonders kompakte Ausführung, bei der im Innern der Spannmutter angeordnete Klemmelemente verkippt werden. Vorzugsweise werden diese Klemmelemente durch zwei gewindeseitig in den Mutternkörper eingearbeitete radiale Innennuten gebildet. Die Unterteilung der verkippbaren Ausschnitte erfolgt vorzugsweise durch radiale Bohrungen. Dadurch ist eine besonders einfache und kostengünstige Herstellung gewährleistet.

Nach einer Weiterbildung der Erfindung weist die Spannmutter eine radiale Aussennut auf, in welche ein Dichtring, vorzugsweise ein Labyrinthdichtring eingesetzt ist. Dadurch wird eine Dichtmutter realisiert, bei der sich die Lamellendichtringe im Aussendurchmesser des umgebendenen Gehäuses zentrieren und bei der die Nut im Zusammenwirken mit den Dichtringen als Labyrinth wirkt. Weitere vorteilhafte Merkmale ergeben sich aus den abhängigen Patentansprüchen, der nachfolgenden Beschreibung sowie der Zeichnung.

Zwei Ausführungsbeispiele der Erfindung werden nachfolgend anhand der Zeichnung näher erläutert. Es zeigen:
Figur 1 eine räumliche Ansicht einer erfindungsgemässen Spannmutter,
Figur 2 eine Ansicht der Spannmutter gemäss Figur 1,
Figur 3 einen Schnitt entlang der Linie III-III der Figur 2,
Figur 4 einen Schnitt entlang der Linie IV-IV der Figur 2,
Figur 5 eine räumliche Darstellung einer Spannmutter nach einer Variante,
Figur 6 eine Ansicht der Spannmutter gemäss Figur 5,
Figur 7 einen Schnitt entlang der Linie VII-VII der Figur 6, und
Figur 8 einen Schnitt entlang der Linie VIII-VIII der Figur 6.

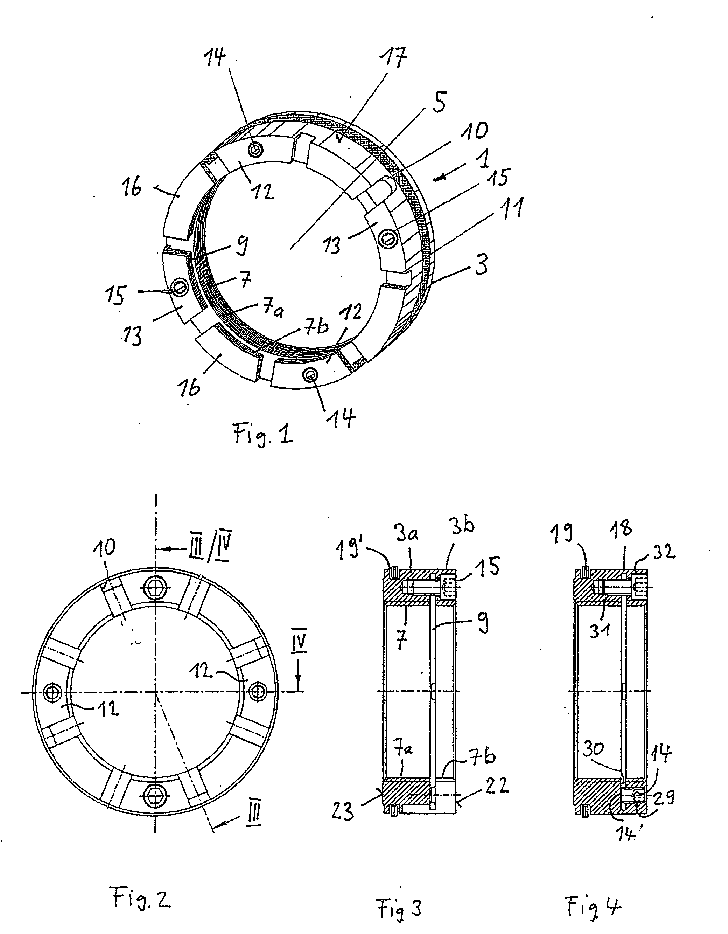

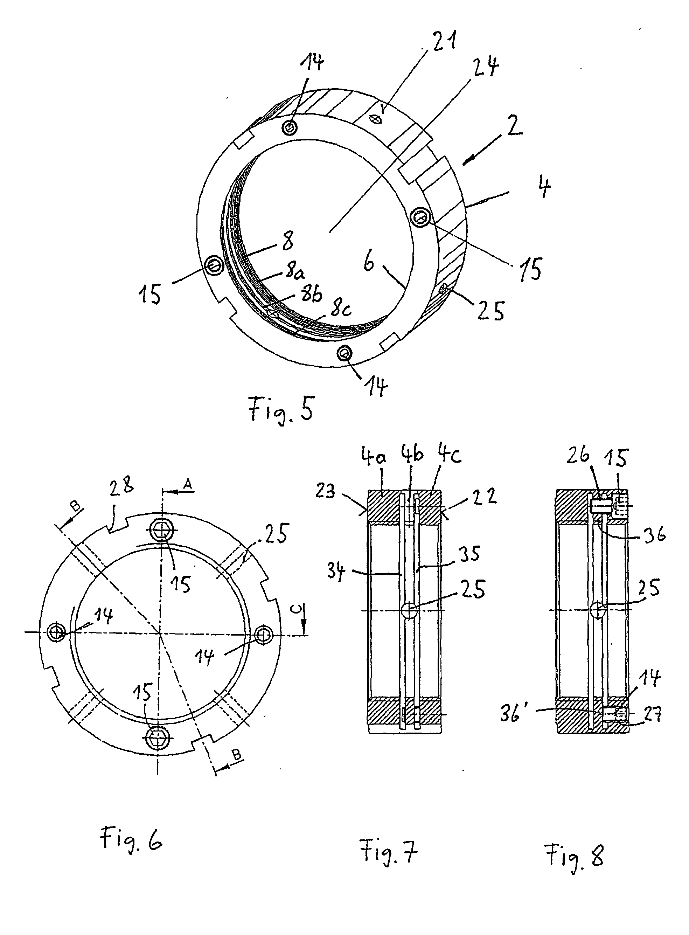

Die in Figur 1 etwa in natürlicher Grösse gezeigte Spannmutter 1 weist einen Mutternblock 3 auf, der eine Bohrung 5 mit einem Innengewinde 7 aufweist. Eine umlaufende radiale Innennut 9 unterteilt den Mutternblock 3 in einen Grundblock 3a sowie einen Teil 3b (Figur 3). Der Teil 3b ist durch radiale Nuten 11 und 10 in Abschnitte 12, 13 und 16 unterteilt. Diese Abschnitte sind jeweils über vergleichsweise schmale Stege 18 mit dem Grundblock 3a federelastisch verbunden. Wie insbesondere Figur 1 zeigt, ist das Gewinde 7 in einen Bereich 7a des Grundblocks 3a und einen Bereich 7b der Abschnitte 12, 13 und 16 unterteilt. Die Unterteilung geschieht beim Einarbeiten der Nut 9.

Die Abschnitte 12 besitzen jeweils etwa mittig eine durchgehende Gewindebohrung 29, in die eine Druckschraube 14 eingesetzt ist. Diese Druckschrauben 14 sind mit einem geeigneten Imbusschlüssel von der Vorderseite 22 axial bedienbar und liegen gemäss Figur 4 mit einer Stirnfläche 14' an einer Fläche 30 der Nut 9 an. Beim Anziehen der Druckschrauben 14 wird der jeweilige Abschnitt 12 vom Grundblock 3a abgestossen und um den Steg 18 geringfügig nach aussen verkippt. Die Gewindeteile 7b der Abschnitte 12 werden damit auf dem hier nicht gezeigten Aussengewinde beispielsweise durch eine Gewindespindel verklemmt, derart, dass die Spannmutter 1 nicht mehr gedreht werden kann.

Die Abschnitte 13 sind gemäss Figur 4 ebenfalls mittig mit einer Stufenbohrung 32 versehen, in die eine Zugschraube 15 eingesetzt ist, welche mit ihrem Schaft in eine Gewindebohrung 31 des Grundkörpers 13 eingreift. Beim Anziehen der Zugschrauben 15 wird der entsprechende Abschnitt 13 um den Steg 18 zum Grundkörper 3a hin gekippt. Die Kippbewegung ist ebenfalls axial, aber entgegengesetzt zu derjenigen der Elemente 12. Auch hier findet ein Verklemmen des Gewindebereichs 7b mit dem Aussengewinde beispielsweise einer Gewindespindel statt. Die Abschnitte 12 und 13 bilden somit Klemmelemente, die von der Vorderseite 22 bedienbar sind. Wie die Figuren 1 und 2 zeigen, liegen gleiche Klemmelemente 12 bzw. 13 diametral gegenüber. Die Anordnung der Klemmelemente ist vorzugsweise symmetrisch und vorzugsweise ist eine gerade Anzahl der Klemmelemente 12 und 13 vorgesehen. Indem alternierende Klemmelemente sich abstossen und anziehen, findet eine gegenseitige Kompensation der Kräfte statt. Die Abschnitte 12 und 13 verkrallen sich gegenseitig im Gewinde, so dass so gut wie keine Kräfte auf den Grundblock 3a übertragen werden. Vorzugsweise sind insgesamt vier Klemmemelemente 12 und 13 vorgesehen. Denkbar ist jedoch auch eine Ausführung, bei welcher mehr, beispielsweise zehn Klemmelemente vorgesehen sind.

Wesentlich ist nun, dass über den Umfang gesehen die Klemmelemente 12 und 13 weniger als 50 % des Umfangs bzw. des Teils 3b ausmachen. Wie ersichtlich, ist jeweils zwischen zwei Abschnitten 12 und 13 ein Abschnitt 16 vorgesehen, der weder mit einer Druckschraube noch mit einer Zugschraube versehen ist und der somit beim axialen Sichern nicht verkippt oder sonstwie bewegt wird. Damit wird erreicht, dass beim oben genannten Verkippen der Abschnitte 12 und 13 lediglich ein geringfügiger Druck auf den Mutternblock 3 ausgeübt wird. Dieser Druck ist jedenfalls so klein, dass die plangeschliffene Stirnfläche 23 nicht verzogen wird. Die nicht kippbaren Abschnitte 16 bilden somit einen wesentlichen Anteil des Teiles 3b und stabilisieren den Mutternkörper 3.

In die Umfangsfläche 17 kann eine umlaufende radiale Nut 19' eingearbeitet sein, in welche ein Dichtungsring 19, vorzugsweise ein Lamellendichtring eingelegt ist. Die Spannmutter 1 bildet dann eine Dichtmutter, bei der sich der Lamellendichtring 19 im Aussendurchmesser des hier nicht gezeigten umgebenden Gehäuses zentrieren kann. Der Dichtring 19 bzw. die Nut 19' können jedoch auch weggelassen werden.

Die oben genannten Überlegungen gelten grundsätzlich auch für die in den Figuren 5 bis 8 gezeigte Spannmutter 2. Diese weist ebenfalls einen Mutternblock 4 auf, der eine zylindrische Aussenfläche 21 besitzt. Die Aussenfläche 21 kann jedoch auch mehreckig, beispielsweise sechseckig sein. Zum Anziehen der Spannmutter 2 sind in die Aussenfläche 21 mehrere Nuten 28 eingearbeitet. Die hochpräzise geschliffene Planfläche 23 befindet sich gemäss Figur 7 gegenüber der Vorderseite 22, von der her zwei Druckschrauben 14 sowie zwei Zugschrauben 15 bedienbar sind. Die verkippbaren Abschnitte 14b befinden sich hier jedoch im Innern des Mutternkörpers 4 und wird durch zwei raidiale Nuten 34 und 35 gebildet, wie die Figuren 7 und 8 deutlich zeigen. Diese beiden Nuten schneiden aus dem Mutternblock 4 einen vergleichsweise schmalen Bereich 4b heraus, der durch vier radiale Bohrungen 25 in vier Abschnitte 36 unterteilt wird. Zwei gegenüberliegende Abschnitte 36 weisen gemäss Figur 8 eine Gewindebohrung 26 auf, in die eine Zugschraube 15 eingedreht ist. An den beiden anderen Abschnitten 36' liegt eine Druckschraube 14 an, die in eine Gewindebohrung 27 des Teils 4c eingedreht ist. Durch die Schrauben 15 und 14 werden die Abschnitte 36 bzw. 36' aufzug- bzw. druckbelastet und damit in entgegengesetzter Richtung verkippt. Auch hier ist das bereits oben erwähnte Verkrallen der belasteten Abschnitte gewährleistet. Auf die Abschnitte 4a und 4c des Mutternblockes 4 werden so gut wie keine internen Kräfte übertragen.

## Patentansprüche

1. Spannmutter (1, 2), mit einem massiven Mutternblock (3, 4), der ein Innengewinde (7, 8), eine planbearbeitete und im rechten Winkel zur Achse des Gewindes (7, 8) ausgerichtete Stirnfläche (23) sowie eine Umfangsfläche (17, 21) aufweist, mit Klemmelementen (12, 13; 36, 36'), die jeweils einen sich radial erstreckenden und segementförmigen Ausschnitt aus einem Teil (3b; 4b, 4c) des Mutternblockes (3, 4) bilden und zur axialen Sicherung mittels einer achsparallel bedienbaren Klemmschraube (14, 15) federnd kippbar sind, **dadurch gekennzeichnet, dass** die Klemmelemente (12, 13; 36, 36') höchstens 50 % des genannten Teils (3b; 4b, 4c) bilden, derart, dass beim axialen Sichern auf der Spannseite höchstens 50 % des Gewindeumfangs in der ursprünglich gefertigten Form verändert werden, wobei die segmentförmigen Ausschnitte durch wenigstens eine innseitig in den Mutternkörper (3, 4) eingearbeitete Innennut (9, 34, 35) gebildet sind.

2. Spannmutter (1, 2) nach Anspruch 1, **dadurch gekennzeichnet, dass** eine gerade Anzahl von Klemmelementen (12, 13; 36, 36') vorgesehen ist und dass in Umfangsrichtung gesehen diese Klemmelemente abwechselnd in entgegengesetzte axiale Richtungen verkippbar sind.

3. Spannmutter (1, 2) nach Anspruch 2, **dadurch gekennzeichnet, dass** die Klemmelemente (12, 13; 36, 36') abwechselnd mit einer Druck- oder Zugschraube (14, 15) versehen sind.

4. Spannmutter (1, 2) nach einem der Ansprüche 1 bis 3, **dadurch gekennzeichnet, dass** jeweils zwischen zwei Klemmelementen (12, 13) ein segmentförmiger und nicht spannbarer Abschnitt (16) des Mutternkörpers (3) angeordnet ist.

5. Spannmutter (1, 2) nach Anspruch 4, **dadurch gekennzeichnet, dass** die nicht spannbaren Abschnitte (16) in Umfangsrichtung gesehen jeweils grösser sind als die spannbaren Klemmelemente (12, 13).

6. Spannmutter (1, 2) nach Anspruch 4 oder 5, **dadurch gekennzeichnet, dass** vier Klemmelemente (12, 13) und vier nicht spannbare Abschnitte (16) vorgesehen sind.

7. Spannmutter (1, 2) nach einem der Ansprüche 1 bis 6, **dadurch gekennzeichnet, dass** die Klemmelemente (36, 36') im Innern des Mutternkörpers (4) angeordnet sind und diese Klemmelemente (36, 36') eine Dicke aufweisen, die wesentlich kleiner, vorzugsweise höchstens 50 % der Dicke eines äusseren Bereichs (4c) aufweist.

8. Spannmutter (1, 2) nach Anspruch 7, **dadurch gekennzeichnet, dass** die Klemmelemente (36, 36') durch zwei innenseitig in den Mutternkörper (4) eingearbeitete Innennuten (34, 35) gebildet sind.

9. Spannmutter (1, 2) nach Anspruch 7 oder 8, **dadurch gekennzeichnet, dass** die Klemmelemente (36, 36') durch radiale Bohrungen (25) unterteilt sind.

10. Spannmutter (1, 2) nach einem der Ansprüche 1 bis 9, **dadurch gekennzeichnet, dass** sie eine radiale Aussennut (19') aufweist, in welche ein Dichtring (19), vorzugsweise ein Labyrihthdichtring eingesetzt ist.

## Claims

1. Clamping nut (1, 2) having a solid nut block (3, 4) which has an internal thread (7, 8), a machined end face (23) oriented at right angles to the axis of the thread (7, 8), and a circumferential surface (17, 21), having gripping elements (12, 13; 36, 36') which in each case form a radially extending and segment-shaped section of a part (3b; 4b, 4c) of the nut block (3, 4) and can be tilted in a flexible manner for axial locking by means of a gripping screw (14, 15) which can be operated in an axially parallel manner, **characterized in that** the gripping elements (12, 13; 36, 36') form at most 50% of said part (3b; 4b, 4c) in such a way that, during the axial locking on the clamping side, at most 50% of the thread circumference in the originally produced form is changed, the segment-shaped sections being formed by at least one inner groove (9, 34, 35) made on the inside in the nut body (3, 4).

2. Clamping nut (1, 2) according to Claim 1, **characterized in that** an even number of gripping elements (12, 13; 36, 36') are provided, and **in that** these gripping elements, as viewed in the circumferential direction, can be tilted alternately in opposite axial directions.

3. Clamping nut (1, 2) according to Claim 2, **characterized in that** the gripping elements (12, 13; 36, 36') are alternately provided with a compression or tension screw (14, 15).

4. Clamping nut (1, 2) according to one of Claims 1 to 3, **characterized in that** a segment-shaped section (16) of the nut body (3) which cannot be tightened is arranged in each case between two gripping elements (12, 13).

5. Clamping nut (1, 2) according to Claim 4, **characterized in that** the sections (16) which cannot be tightened, as viewed in the circumferential direction, are in each case larger than the gripping elements (12, 13) which can be tightened.

6. Clamping nut (1, 2) according to Claim 4 or 5, **characterized in that** four gripping elements (12, 13) and four sections (16) which cannot be tightened are provided.

7. Clamping nut (1, 2) according to one of Claims 1 to 6, **characterized in that** the gripping elements (36, 36') are arranged in the interior of the nut body (4), and these gripping elements (36, 36') have a thickness which is substantially smaller than, preferably at most 50% of, the thickness of an outer region (4c).

8. Clamping nut (1, 2) according to Claim 7, **characterized in that** the gripping elements (36, 36') are formed by two inner grooves (34, 35) made on the inside in the nut body (4).

9. Clamping nut (1, 2) according to Claim 7 or 8, **characterized in that** the gripping elements (36, 36') are subdivided by radial holes (25).

10. Clamping nut (1, 2) according to one of Claims 1 to 9, **characterized in that** it has a radial outer groove (19') into which a sealing ring (19), preferably a labyrinth sealing ring, is inserted.

## Revendications

1. Ecrou tendeur (1, 2), comprenant un bloc d'écrou massif (3, 4), qui présente un filetage interne (7, 8), une surface frontale (23) usinée par tournage transversal et orientée suivant un angle droit par rapport à l'axe du filetage (7, 8), ainsi qu'une surface périphérique (17, 21), avec des éléments de serrage (12, 13 ; 36, 36'), qui forment chacun une portion s'étendant radialement et en forme de segment à partir d'une partie (3b ; 4b, 4c) du bloc d'écrou (3, 4), et qui peuvent être basculés de manière élastique en vue de la fixation axiale au moyen d'une vis de serrage (14, 15) actionnable dans une direction parallèle à l'axe, **caractérisé en ce que** les éléments de serrage (12, 13 ; 36, 36') forment au maximum 50 % de ladite partie (3b ; 4b, 4c), de telle sorte que lors de la fixation axiale sur le côté de tensionnement, au maximum 50 % du pourtour de filetage dans la forme fabriquée initialement soient modifiés, les portions en forme de segment étant formées par au moins une rainure interne (9, 34, 35) usinée du côté interne dans le corps d'écrou (3, 4).

2. Ecrou tendeur (1, 2) selon la revendication 1, **caractérisé en ce qu'**il est prévu un nombre pair d'éléments de serrage (12, 13 ; 36, 36') et que vu dans la direction périphérique, ces éléments de serrage peuvent être basculés alternativement dans des directions axiales opposées.

3. Ecrou tendeur (1, 2) selon la revendication 2, **caractérisé en ce que** les éléments de serrage (12, 13 ; 36, 36') sont pourvus en alternance d'une vis de serrage ou de tension (14, 15).

4. Ecrou tendeur (1, 2) selon l'une quelconque des revendications 1 à 3, **caractérisé en ce qu'**à chaque fois entre deux éléments de serrage (12, 13) est disposée une section (16) du corps d'écrou (3) en forme de segment et ne pouvant pas être tendue.

5. Ecrou tendeur (1, 2) selon la revendication 4, **caractérisé en ce que** les sections (16) ne pouvant pas être tendues, vu dans la direction périphérique, sont à chaque fois plus grosses que les éléments de serrage pouvant être tendus (12, 13).

6. Ecrou tendeur (1, 2) selon la revendication 4 ou 5, **caractérisé en ce qu'**il est prévu quatre éléments de serrage (12, 13) et quatre sections (16) ne pouvant pas être tendues.

7. Ecrou tendeur (1, 2) selon l'une quelconque des revendications 1 à 6, **caractérisé en ce que** les éléments de serrage (36, 36') sont disposés à l'intérieur du corps d'écrou (4) et ces éléments de serrage (36, 36') présentent une épaisseur qui est considérablement plus petite, de préférence de 50 % au maximum de l'épaisseur d'une partie extérieure (4c).

8. Ecrou tendeur (1, 2) selon la revendication 7, **caractérisé en ce que** les éléments de serrage (36, 36') sont formés par deux rainures internes (34, 35) usinées du côté interne dans le corps d'écrou (4).

9. Ecrou tendeur (1, 2) selon la revendication 7 ou 8, **caractérisé en ce que** les éléments de serrage (36, 36') sont divisés par des alésages radiaux (25).

10. Ecrou tendeur (1, 2) selon l'une quelconque des revendications 1 à 9, **caractérisé en ce qu'**il présente une rainure externe radiale (19'), dans laquelle est insérée une bague d'étanchéité (19), de préférence une bague d'étanchéité à labyrinthe.
